(19) Europäisches Patentamt / European Patent Office / Office européen des brevets

(11) **EP 1 854 849 A2**

(12) **EUROPÄISCHE PATENTANMELDUNG**

(43) Veröffentlichungstag:
**14.11.2007 Patentblatt 2007/46**

(51) Int Cl.:
***C09C 1/24*** *(2006.01)*

(21) Anmeldenummer: **07008767.1**

(22) Anmeldetag: **30.04.2007**

| | |
|---|---|
| (84) Benannte Vertragsstaaten:<br>**AT BE BG CH CY CZ DE DK EE ES FI FR GB GR HU IE IS IT LI LT LU LV MC MT NL PL PT RO SE SI SK TR**<br>Benannte Erstreckungsstaaten:<br>**AL BA HR MK YU** | (71) Anmelder: **Lanxess Deutschland GmbH & Co.KG**<br>**51369 Leverkusen (DE)** |
| | (72) Erfinder: **Rosenhahn, Carsten, Dr.**<br>**47799 Krefeld (DE)** |
| (30) Priorität: **13.05.2006 DE 102006022449** | |

(54) **Verbesserte Eisenoxidgelbpigmnete**

(57) Die vorliegende Erfindung betrifft verbesserte Eisenoxidgelbpigmente und deren Verwendung.

**EP 1 854 849 A2**

## Beschreibung

Die vorliegende Erfindung betrifft verbesserte Eisenoxidgelbpigmente und deren Verwendung.

Das Fällverfahren sowie das Penniman-Zoph Verfahren zur Herstellung von Eisenoxidgelbpigmenten sind seit langem bekannt. Der typische Verlauf dieser Verfahren ist beispielsweise in Ullmann's Encyclopedia of Industrial Chemistry, 5th Ed., Vol. A20, S. 297 ff, oder in den Patentschriften US 1,327,061 A1 und US 1,368,748 A1 beziehungsweise DE 3907910 A1 beschrieben. Als Rohstoff und Elektrolytkatalysator wird gewöhnlich Eisen-II-sulfat, welches beim Abbeizen von Stahlblechen anfällt oder bei der Produktion von Titandioxid nach dem Sulfatverfahren entsteht, verwendet. Ferner ist der Einsatz von Eisen-II-sulfat aus der Produktion von niedrig legierten Stahlresten in Form von Blechen, Drahtrollen, Fe - Pulver mit Schwefelsäure möglich.

Generell wird $\alpha$-FeOOH (Eisenoxidgelb) aus Eisen-II-salzen nach dem Fällverfahren (DE 2 455 158 A1) oder nach dem Penniman-Verfahren (US 1 368 748 A1, US 1 327 061 A1) hergestellt. Bei beiden Verfahren wird zunächst ein Keim hergestellt, auf den dann in einem weiteren Schritt verhältnissmässig langsam weiteres $\alpha$-FeOOH aufwachsen gelassen wird.

Die nach diesen Verfahren hergestellten Eisenoxid-Gelbpigmente zeichnen sich durch eine helle und gelbe Farbe aus, haben allerdings eine für den Endanwender ungünstige Ölzahl.

Die Ölzahl wird gemäß der DIN 53199 aus dem Jahr 1973 bestimmt. Mit Hilfe der Ölzahl kann der Praktiker den Bindemittelbedarf eines Pigmentes abschätzen. Je höher die Ölzahl ist, desto höher ist auch der Bindemittelbedarf. Die Ölzahl lässt außerdem auch Rückschlüsse auf die Höhe der zu erwartenden Pigment-Volumen-Konzentration zu.

Ist die Ölzahl eines Pigmentes niedriger, kann ein Pigment umweltfreundlicher verarbeitet werden, wodurch eine Vereinfachung des Verfahrens sowie eine niedrigerer Energieverbrauch für den Endanwender entsteht. Die geringe Ölabsorption in Oxyden erlaubt dem Verbraucher, vor allem in der Farbenindustrie, eine Zusammensetzung mit einer höheren Menge Oxyd und einem geringeren Einsatz von Zusatzstoffen einzusetzen um die gewünschte Qualität für das Produkt zu erreichen. Die höhere Pigmentvolumenkonzentration ermöglicht eine größere Farbdichte bei der Pastenherstellung was sich wiederum positiv auf die spezifischen Transportkosten der Pigmentpasten auswirkt.

Eine hohe Farbstärke verstärkt die gewünschten Effekte für den Endanwender zusätzlich.

Aufgabe der vorliegenden Erfindung war es daher, Pigmente zu entwickeln, die bei niedriger Ölzahl und hoher Farbstärke einen vergleichbaren Farbort aufweisen wie Pigmente nach dem Stand der Technik.

Diese Aufgabe wurde gelöst durch ein Eisenoxidgelbpigment mit einer Ölzahl < 25 und entweder

- einem a*-Wert von > 4,3 gemessen nach CIELAB-Einheiten in Aufhellung in L64 gemäß DIN 6174 und/oder einem b*-Wert von > 34 gemessen nach CIELAB-Einheiten in Aufhellung in L64 gemäß DIN 6174 oder

- einem a*-Wert von > 10 gemessen nach CIELAB-Einheiten in Purton gemäß DIN 6174 und/oder einem b*-Wert von > 45 gemessen nach CIELAB-Einheiten in Purton gemäß DIN 6174,

und einen Verschnittverhältnis für den Farbtiefenkennwert B 1/9 nach DIN 53235 Teil 1 und 2 von > - 6.5.

Das Eisenoxidgelbpigment weist vorzugsweise eine Dispergierbarkeit nach EN 21524 / DIN ISO 1524 (2002) in der erweiterten Form als "3-Kästchen-Methode" von besser als 30-50-70 auf.

Das Eisenoxidgelbpigment weist vorzugsweise eine Wasserzahl < 50 auf.

Das Eisenoxidgelbpigment weist vorzugsweise eine BET >14 auf.

Das Eisenoxidgelbpigment weist vorzugsweise eine Schüttdichte > 0,4 auf.

Das Eisenoxidgelbpigment weist vorzugsweise eine Stampfdichte > 0,7 auf. Die hohe Schüttdichte und Stampfdichte erleichtert nicht nur die Erstellung der Formel sondern hat Auswirkungen auf die Transport- und Lagerkosten.

Das Eisenoxidgelbpigment weist vorzugsweise eine Viskosität in MAP < -25 gegen Bayferrox® 3910 auf.

Die Methoden zur Messung der oben beschriebenen Eigenschaften sind in den Beispielen angegeben.

### Prozessbeschreibung zur Herstellung von Eisenoxid Gelb

Der Prozess zur Herstellung der Eisenoxidgelbpigmente gliedert sich in zwei Teile, der Keimherstellung und der Pigmentherstellung.

### Keimherstellung

Gemäß den folgenden Reaktionsgleichung:

$$2FeSO_4 \cdot 7H_2O + 4NaOH + \tfrac{1}{2}\,O_2 \rightarrow 2FeOOH + 2Na_2SO_4 + 15H_2O$$

wird der Eisenoxidkeim aus einer Eisensulfatlösung durch Zugabe von Natronlauge unter Luftoxidation hergestellt. Dabei erhält man FeOOH in Form von Mikrokristallen (Keim).

Um ein helles Gelb zu erzielen muss die durchschnittliche Temperatur der Reaktion unter 35°C gehalten werden.

**Pigmentherstellung**

Gemäß den Reaktionsgleichungen:

$$4FeSO_4 + O_2 + 6H_2O \rightarrow 4FeOOH + 4H_2SO_4$$

$$Fe \text{ (Eisenschrott)} + H_2SO_4 \rightarrow Fe\ SO_4 + N_2$$

wird der im ersten Verfahrensschritt hergestellten Keim durch Zugabe von Eisenschrott unter Oxidation mit Luftsauerstoff zu einem Kristall aufgebaut.

Anschließend wird das Produkt salzfrei gewaschen, so dass die Leitfähigkeit am ablaufenden Waschwasser noch maximal 2 mS/cm beträgt. Am Ende des Filterungsprozesses erhalten wir eine Eisenoxid-Paste mit einem Feuchtigkeitsanteil von 50%. Danach wird das Produkt getrocknet und gemahlen.

Die Erfindung umfasst auch die Verwendung des Eisenoxidgelbpigments zur Einfärbung von anorganischen oder organischen Dispersionen, von Erzeugnissen der Farben-, Lack-, Beschichtungs-, Baustoff-, Kunststoff- und Papierindustrie, in Lebensmitteln, sowie in Produkten der Pharmaindustrie wie Tabletten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne dass dadurch eine Einschränkung der Erfindung bewirkt werden soll. Die gemachten Mengenangaben in Gew.-% beziehen sich jeweils auf das eingesetzte Pigment.

**Beispiele**

**Beschreibung der verwendeten Messmethoden**

**A. Messung der Farbwerte in L64, Aufhellung und Purton**

Das Pigment wurde mit dem Muller in einem nichttrocknenden Prüfbindemittel präpariert. Das Prüfbindemittel (Paste) besteht für die Aufhellung aus zwei Komponenten, bei dem Purton wird nur Komponente 1 eingesetzt:

**Komponente 1**

SACOLYD® L640 (Krems Chemie AG, AU, Alkydharz-Bindemittel auf Basis Leinöl und Phthalsäureanhydrid) (vormals ALKYDAL® L64 (Bayer AG, DE)). Es entspricht den Spezifikationen, die in den Normen DIN EN ISO 787-24 (Oktober 1995), ISO 787- 25:1993 und DIN 55983 (Dezember 1983) als Anforderungen an ein Prüfbindemittel für Farbpigmente genannt werden.

**Komponente 2**

LUVOTHIX® HT (Lehmann & Voss & Co., DE, pulverförmiges, modifiziertes, hydriertes Rizinusöl) als rheologisches Additiv, welches zum Thixotropieren der Paste zugesetzt wird. Es wurde in einer Konzentration von 5,0 Gew.-%, bezogen auf Komponente 1 eingesetzt.

Die Komponente 2 wurde in der Komponente 1 bei 75 - 95 °C gelöst. Die abgekühlte, stichfeste Masse wurde einmal über ein Dreiwalzwerk gegeben. Damit wurde die L64 Paste fertiggestellt. Verwendet wurde eine Teller-Farbenausreibmaschine (Muller), wie in DIN EN ISO 8780-5 (April 1995) beschrieben. Zur Anwendung kam ein ENGELSMANN JEL 25/53 Muller mit einem wirksamen Tellerdurchmesser von 24 cm. Die Drehzahl des unteren Tellers betrug ca. 75 min-1. Durch Einhängen eines 2,5 kg Belastungsgewichtes auf den Belastungsbügel wurde die Kraft zwischen den Tellern auf ca. 0,5 kN eingestellt.

Als Aufhellmittel wurde ein handelsübliches Titandioxidpigment, TRONOX® R-KB-2, Kerr-McGee Corp., US) (vorm. BAYERTITAN® R-KB-2 (Bayer AG, DE)), verwendet. R-KB-2 entspricht in seiner Zusammensetzung dem Typ R 2 in ISO 591 - 1977. Es wurde 0,4g zu prüfendes Pigment, 2,0 g TRONOX ® R-KB-2 und 3,0 g Paste in fünf Stufen zu je 25 Umdrehungen nach dem in DIN EN ISO 8780-5 (April 1995) Abschnitt 8.1 beschriebenen Verfahren dispergiert.

Bei der Messung im Purton wird 1 g zu prüfendes Pigment in 3 g Komponente 1 in fünf Stufen zu je 25 Umdrehungen nach dem in DIN EN ISO 8780-5 (April 1995) Abschnitt 8.1 beschriebenen Verfahren dispergiert.

Anschließend wurde die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so dass ein glatte Oberfläche entsteht. Die Rakel wird dabei in einer Richtung mit einer Geschwindigkeit von ca. 3 - 7 cm/s bewegt. Die glatte Oberfläche wird innerhalb weniger Minuten gemessen.

## Farbmessgerät

Es wurde ein Spektrophotometer ("Farbmessgerät") mit der Messgeometrie d/8 ohne Glanzfalle verwendet. Diese Messgeometrie ist in ISO 7724/2-1984 (E), Punkt 4.1.1, in DIN 5033 Teil 7 (Juli 1983), Punkt 3.2.4 und in DIN 53236 (Januar 1983), Punkt 7.1.1 beschrieben.

Zur Anwendung kam ein DATAFLASH® 2000-Meßgerät (Datacolor International Corp., USA). Das Farbmessgerät wurde gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmessgerät hinterlegt, so dass nach Kalibrierung mit dem weißen Arbeitsstandard alle Farbmessungen auf den ideal mattweißen Körper bezogen werden. Die Schwarzpunktkalibrierung wurde mit einem schwarzen Hohlkörper des Farbmessgeräteherstellers ausgeführt.

## Farbmessung

Das Ergebnis der Farbmessung ist ein Reflexionsspektrum. Für die Berechnung von farbmetrischen Größen spielt es keine Rolle, bei welcher Lichtart die Messung erfolgte (außer bei fluoreszierenden Proben). Aus dem Reflexionsspektrum kann jede beliebige farbmetrische Größe berechnet werden. Die in diesem Fall verwendeten farbmetrischen Größen werden gemäß der DIN 6174 (CIELAB-Werte) berechnet.

Eine eventuell vorhandene Glanzfalle ist ausgeschaltet. Die Temperatur von Farbmessgerät und Prüfling betrug ca. 25 °C ± 5 °C.

## B. Farbstärke

Die Farbwerte werden gemäß der oben beschriebenen Messung nach DIN 6174 (CIELAB-Werte) angegeben. Aus der Messung in der Aufhellung resultiert auch die Farbstärke des gemessenen Farbpigmentes (siehe Tabelle 1). Um aus diesen Angaben einen absoluten Kennwert anzugeben, wurde das sogenannte "Verschnittverhältnis" berechnet. Das Verschnittverhältnis wurde gemäß der DIN-Norm 53235 Teil 1 und Teil 2 aus dem Jahr 1974 für den Farbtiefenkennwert B 1/9 bestimmt. Anschaulich wird mit dem Verschnittverhältnis das Verhältnis einer farbgebenden Substanz zu einer Mischkomponente (im gegebenen Fall: $TiO_2$) angegeben, mit der eine definierte Farbtiefe (Einfärbungstiefe) gemäß der DIN-Norm 53235 Teil 1 und 2 aus dem Jahr 1974 erreicht wird. Ein hohes Verschnittverhältnis bedeutet, dass mit weniger Pigment die gleiche Einfärbungstiefe erreicht werden kann. Ein solches Pigment ist deshalb in der praktischen Anwendung farbstärker.

## C. Dispergierbarkeit

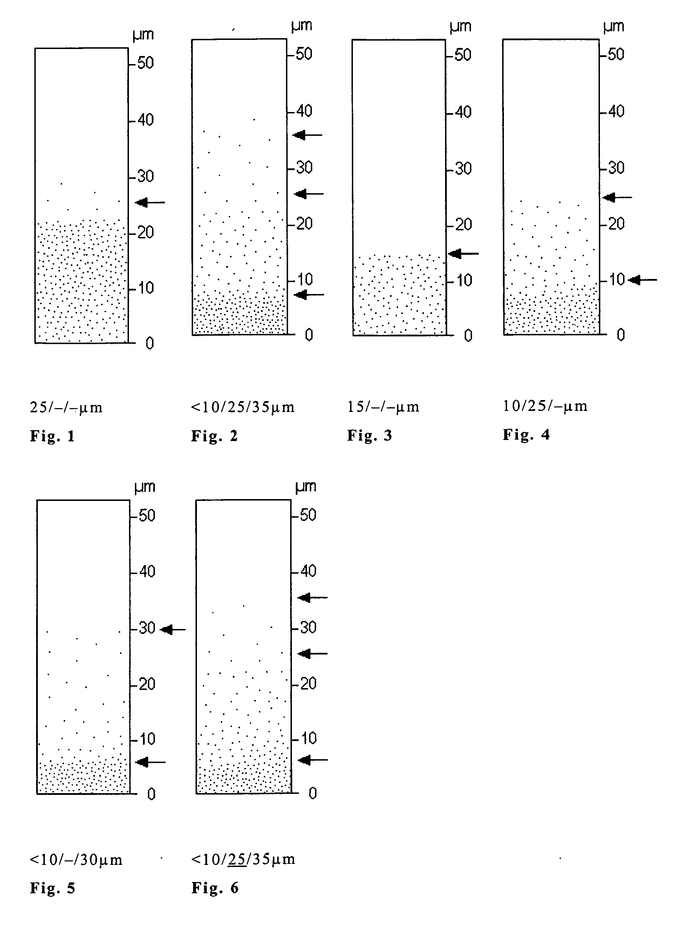

Die Methode wird beschrieben in DIN ISO 1524, "Bestimmung der Mahlfeinheit (Körnigkeit)", und als charakteristischer Kennwert wird danach der Wert abgelesen (in $\mu$m), "unterhalb dessen eine größere Anzahl von Pigmentkörnern als Stippen oder Kratzer auf der Oberfläche (des ausgestrichenen Lackes) sichtbar wird. Einzelne, zufällig aufgetretene Stippen oder Kratzer werden dabei nicht berücksichtigt (Figur 1)."

Die zur Prüfung der Pigmente angewandte Methode "3-Kästchen-Methode" ist eine erweiterte Form der Ablesung, bei der als Ergebnis drei Werte angegeben werden.

Der Hauptbereich in Form eines dichten geschlossenen Stippenfeldes, darüber ein Gebiet mit mittelhoher Stippenkonzentration und schließlich wiederum darüber ein Gebiet mit sehr geringer Stippenkonzentration (nahezu Einzelstippen, die allerdings reproduzierbar auftreten) (Figur 2). Deshalb wird ein Werte-Tripel festgehalten, das die oberen Grenzen der angeführten drei Bereiche charakterisiert. Ein Grindometeraufstrich gemäß Figur 2 wird danach in folgender Weise beurteilt: < 10/25/35 $\mu$m.

Die drei Werte lassen durch ihre Position innerhalb des Tripels klar erkennen, welcher Art der drei Stippenfelder sie zuzuordnen sind. Tritt in speziellen Fällen einer der drei Bereiche nicht auf, so erscheint an der betreffenden Stelle ein Strich (Beispiele hierzu siehe Figuren 1, 3, 4 und 5).

Ist die Stippenkonzentration in einem Bereich bemerkenswert hoch (ohne jedoch die Dichte des Nachbarbereiches zu erreichen), so ist dies durch Unterstreichen des betreffenden Grenzwertes anzugeben. Ein Beispiel hierzu zeigt Figur 6 (im Vergleich zu Figur 2).

### D. Wasserzahl

Die Wasserzahl wurde gemäß DIN 55608 (Juni 2000) bestimmt.

### E. BET-Oberfläche

Die Bestimmung der BET-Oberfläche erfolgt über das Trägergasverfahren (He:N2=90:10) nach der Einpunkt-Methode, gemäß DIN 66131 (1993). Vor der Messung wird die Probe 1 h bei 140 °C im trockenen Stickstoffstrom ausgeheizt. Die Messtemperatur beträgt 77 K.

### F. Schüttdichte

Die Schüttdichte wurde am Fertiggut ohne weitere Behandlung des Produktes durch das Verhältnis aus Masse und Volumen bestimmt.

### G. Stampfdichte

Die Stampfdichte wurde gemäß ISO 787 Teil 11 (1995) bestimmt.

### H. Viskosität

Eine grundlegende Beschreibung zur rheologischen Eigenschaften befindet sich in "Rheologie und Rheometrie mit Rotationsviskosimetern" HAAKE KG, 1 Berlin 37. Folgendes Gerät wurde für die Bestimmung der Viskosität verwendet:

- Krebs-Stormer-Viskosimeter KU-1+ (Hersteller: Braive Instruments)

- Flügelrührer (KU1-10), $\varnothing$ 55 mm, Höhe 8 mm

- Labordissolver mit Drehzahlregler

- Dissolverscheibe, $\varnothing$ 60 mm, grobgezahnt, Zahnhöhe 5mm

- Laborwaage, Auflösung 0,01 g

- Kunststoffbecher 800 ml, $\varnothing$ 100 mm

- Kühlbad

Die aus dem Handel erhältliche (Beispielsweise von der Firma BASF) - und eine für den Fachmann bekannte Standard - MAP (= Mehrzweckabtönpaste)-Vorratslösung (18-Liter-Eimer) ist vor Gebrauch 10 Minuten bei 1000 min$^{-1}$ zu homogenisieren.
In einem 800-ml-Polybecher werden 224,4 g der MAP-Lösung vorgelegt.
Unter Kühlung in einem Wasserbad (15 $\pm$ 3°C) wird mit einem Labordissolver bei ca. 1000 $\pm$ 200 min$^{-1}$ 346,0 g Pigment portionsweise eingearbeitet. Bei der Einarbeitung ist darauf zu achten, dass sich kein Pigment an der Oberfläche absetzt; ggf. den Rührer höher stellen oder kurzfristig die Tourenzahl erhöhen.
Wenn die gesamte Pigmentmenge untergerührt ist, werden die Rührwelle und innere Wand des Bechers von unbenetzten Pigmentteilchen gesäubert. Dazu wird der Rührer kurzzeitig abgeschaltet und aus dem Probenbecher gehoben. Die Wandung des Bechers wird mit einem Spatel gereinigt. Dann wird der Rührer wieder abgesenkt und in Betrieb genommen.
Der Bodenabstand der Zahnscheibe beträgt ca.10 mm. Die Drehzahl wird auf

3000 $\pm$ 100 min$^{-1}$ erhöht. Die Dispergierdauer bei dieser Drehzahl beträgt 15 Minuten.

Während der Dispergierdauer wird die Paste durch Zugabe von 10 %iger Natronlauge (Menge circa 3 - 6ml) auf einen pH-Wert von 8,5 $\pm$ 0,5 eingestellt, der Wert darf auf keinen Fall pH=7,5 unterschreiten. Der pH-Wert muss mehrmals innerhalb der Dispergierdauer überprüft werden, da sich der pH-Wert schleichend verändert.

Der Polybecher wird mit einem Deckel verschlossen und 30 min in einem Wasserbad auf 20°C abgekühlt.

Es muss der Viskositätsstandard jeweils mitpräpariert werden.

Vor der Viskositätsmessung ist die Pastentemperatur zu kontrollieren (Sollwert = 20°C). Die Differenz zwischen Probe und Bezug darf max. 2°C betragen.

Weiterhin ist die Paste vor der Messung mit einem Spatel kurz aufzurühren.

Der Flügelrührer eines im Handel erhältlichen Standard-Krebs-Stormer-Viskosimeters ist soweit einzuführen, dass die Markierung an der Welle gerade noch zu sehen ist. Es wird der sich ca. 1 Minute lang nicht mehr verändernde Wert angegeben. Der Flügelrührer wird nach jeder Messung gereinigt.

KU der Probe minus KU des Bezuges = delta KU

Als Bezug wurde Bayferrox 3910 Standard 1987 verwendet, es können aber auch die Vergleichspigmente die in diesem Patent beschriebenen verwendet werden. Beispeilweise ist eine Viskosität von $\pm$ 5 gegen Vergleichbeispiel 2 ein hervorragender Wert.

## II. Beispiele

Im folgenden ist die allgemeine Herstellbeschreibung angegeben. Die Herstellbedingungen für die Beispiele und Vergleichsbeispiele befinden sich in den jeweiligen Tabellen.

## Keimherstellung

Anlage: Offener Rührkessel mit einer Kapazität von 65 m$^3$, Lufteindüsung, Umlaufpumpe und einem mechanischen Rührer.

## Herstellungsprozess

In den Reaktor werden 27,0 m$^3$ Betriebswasser und 0,47 t (11,7 m$^3$) Eisensulfat-Heptahydrat (FeSO$_4$.7H$_2$O) vorgelegt. Nach Einschalten der Umwälzpumpe und des Rührwerks werden 667 kg (9.532 1) aufgelöstes Natriumhydroxid (NaOH + H$_2$O) hinzugegeben. Danach wird die Lufteinspeisung gestartet. Bevorzugt wird die Lufteinspeisung mit einem Durchsatz von 250$\pm$200m$^3$/h, bevorzugt 170$\pm$85m$^3$/h. Das Volumen ist mit Industriewasser aufzufüllen.

Um ein helles Gelb zu erzielen (Beispiel 1-3) muss die, durchschnittliche Temperatur der Reaktion unter 35°C gehalten werden.

Aus den 50 m$^3$ Keimsuspension erhält man durchschnittlich 835 kg FeOOH in Form von Mikrokristallen.

Die kontrollierten Parameter sind:

- BET (m$^2$/g): Oberfläche des Kristalls

- Freies Sulfat (g/l): Überschüssiges Eisensulfat- Heptahydrat, das nicht reagiert hat. Es wirkt als Elektrolyt bei der anschliessenden Aufbaureaktion.

- FeOOH (g/l): Feststoffgehalt an FeOOH pro Liter Keim

- pH: pH-Wert nach Reaktionsende

- Temperatur (°C): Durchschnittliche Reaktionstemperatur

- Zeit (h): Reaktionszeit nach dem Beginn der Luftbegasung

Die Parameter die zum gewünschten Eisenoxidgelb führen sind in Tabelle 1 dargestellt.

**Tabelle 1**

| Variable | Minimum | Maximum |
|---|---|---|
| BET ($m^2$/g) | 50 | 150 |
| Fe00H (g/l) | 5 | 50 |
| pH- Wert | 1,0 | 5,0 |
| Temperatur (°C) | -- | 50 |

**Pigmentherstellung**

Rührkessel mit Luft- und Dampfeinspeisung und gegebenenfalls Umwälzpumpe.

Dem Fachmann bekannte Agregate zur Abtrennung der groben Feststoffe und Lagerung der Suspension nach Reaktionsende. In den leeren und sauberen Reaktor wurde 15 t Eisenschrott geben.

Der Keim wurde in den Reaktor gepumpt und mit Wasser bis 110 $m^3$ aufgefüllt. Die Eisensulfat Heptahydrat Konzentration ($FeSO_4 \cdot 7H_2O$) wurde bis zu einer Konzentration von 45g/l eingestellt. Dampf, Luft und Temperaturmengen wurde gemäß Tabelle 2. eingestellt. Wenn notwendig wurde mit Wasser bis zu einem Volumen von 120 bis 130 $m^3$ aufgefüllt.

Die Reaktion war abgeschlossen wenn die gewünschten Farbwerte erreicht worden sind. Dampf und Luft wurden nach der Reaktion abgestellt und nach Durchlaufen einer Grobfeststoffabtrennung und Waschung gefiltert.

Der überschüssige Eisenschrott wirkte dabei wie ein neutralisierendes Mittel für die hierbei gebildete Schwefelsäure, die als eine stetige Quelle zur Bildung von Eisensulfat vorhanden war.

Nachfolgend sind in Tabelle 2 die im Prozess kontrollierten Parametern zum Erhalt des jeweiligen Typs angegeben.

**Tabelle 2**

| Typ | Beispiel 1-3 | Vergleichsbeispiel 1 | Vergleichsbeispiel 2 |
|---|---|---|---|
| Keim ($m^3$) | 40 | 15 | 20 |
| Keim (t) | 0,68 | 0,25 | 0,33 |
| BET ($m^2$/g) | 65 | 77 | 74 |
| F.G. (g/1) | 77 | 98 | 84 |
| Reaktion (t) | 10,2 | 12,8 | 11,2 |
| Reaktion Stunden (h) | 170 | 123 | 84 |
| End Sulfat (g/l) | 29 | 29 | 30 |
| Reaktions-Temp. (°C) | 70 | 75 | 75 |
| Luft Durchsatz ($m^3$/h) | 255 | 340 | 340 |

Die in Tabelle 2 angegebenen Parameter werden im folgenden erläutert:

- Keim ($m^3$) entspricht dem verwendeten Volumen an Keim.

- Keim (t) entspricht der Masse des im Volumen enthaltenen Keim.

- BET ($m^2$/g) entspricht der Oberfläche des Kristalls.

- F.G. (g/l) entspricht der FeOOH Konzentration zum Ende der Reaktion.

- Reaktion entspricht der Gesamtmasse an FeOOH zum Ende der Reaktion.

- h entspricht der Anzahl an Reaktionsstunden.

- Endsulfat g/l entspricht der Konzentration an g/l Eisensulfat -Heptahydrat zum Ende der Reaktion.

Das Produkt wurde salzfrei gewaschen, so dass die Leitfähigkeit am ablaufenden Waschwasser noch circa maximal 2 mS/cm betrug.

Am Ende des Filtrationsprozesses wurde eine Eisenoxidpaste mit einem Feuchtigkeitsanteil von circa 50% erhalten.

Als Trocknungsaggregat eignen sich grundsätzlich alle gängigen Trockner. Erfindungsgemäß wurde einem dem Fachmann als Drehrohrtrockner bekannter "kontinuierlicher Trockner mit einer doppelten Trockenstufe" eingesetzt.

Das Produkt wurde auf eine Endrestfeuchte von ≤ 10 % getrocknet. Danach erfolgte die Förderung in die Mahlung.

Die eingestellte Trocknungsparameter waren:

- Druck (Dampf) = 10 $\pm$ 1 g/cm$^2$ .

- Temperatur der ersten Trockenstufe = 185 $\pm$ 10°C.

- Amperezahl der ersten Trockenstufe = 180 $\pm$ 20A

- Temperatur der zweiten Trockenstufe = 175 $\pm$ 10°C

- Amperezahl der zweiten Trockenstufe = 70 $\pm$ 20A

Für die Mahlung kann beispielsweise eine dem Fachmann bekannte horizontale Sichtermühlemühle oder eine Vertikalemühle (Typ Turbine) ohne Klassifikator (Sichter) eingesetzt werden.

Gemahlenen wurde in der vertikalen Mühle vom Typ Turbine; die Mikronisierung erfolgte in einer horizontalen Mühle vom Typ Turbine mit einem gekoppelten Klassifikator.

Es wurden folgende Mahlparameter eingestellt:

- Horizontale Mühle vom Typ Turbine mit einem gekoppelten Klassifikator:

- Rotation der Einspeisung = 200 $\pm$ 100 rpm

- Rotation der Mühle = 1.750 rpm

- Rotation des Klassifikators = 850 $\pm$ 200 rpm

- Vertikale Mühle vom Typ Turbine ohne Klassifikator:

- Rotation der Mühle = 1.750 rpm

- Rotation der Einspeisung = 200 $\pm$ 100 rpm

Die Ergebnisse der Beispiele und Vergleichsbeispiele sind in den Tabellen 3 und 4 dargestellt.

**Tabelle 3**

| | Schüttdichte [g/cm$^3$] | Stampfdichte [g/cm$^3$] | BET [m$^2$/g] | Öl-Zahl [g Pigment / 100g Öl] | Wasserzahl [g Pigment / 100 g Wasser] | Dispergierbarkeit | | | Viskosität in MAP [$\Delta$KU] |
|---|---|---|---|---|---|---|---|---|---|
| | | | | | | [$\mu$m] | [$\mu$m] | [$\mu$m] | |
| Beispiel 1 | 0,57 | 0,79 | 16,5 | 23,4 | 42,8 | 10 | 15 | 25 | -19 |
| Beispiel 2 | 0,55 | 0,76 | 16,7 | 23,6 | 38,6 | 10 | 20 | 30 | -18 |
| Beispiel 3 | 0,52 | 0,75 | 15,5 | 23,2 | 37,7 | 15 | 20 | 30 | -21 |
| Vergleichsbeispiel 1 | 0,56 | 0,82 | 16,2 | 23,2 | 38,0 | 60 | 80 | 90 | -22 |
| Vergleichsbeispiel 2 | 0,66 | 0,92 | 15,3 | 21,7 | 36,2 | 25 | 35 | 55 | -23 |
| Ferrit® Y25LO | 0,64 | 0,88 | 16,5 | 23,2 | 40,5 | 100 | --- | --- | -19 |
| Bayferrox® 3910LV Standard 1987 | 0,36 | 0,52 | 14,8 | 30 | 61,4 | 10 | 15 | 20 | 0 |
| Bayferrox® 3910 Standard 1987 | 0,36 | 0,52 | 14,8 | 30 | 61,4 | 10 | 15 | 20 | +18 |
| Bayferrox® 3920 Standard 2002 | --- | 0,63 | 13,3 | 31 | 44,0 | 15 | 20 | 30 | -4 |

**Tabelle 4**

| | Farbwerte in L 64 / Dispergiergerät: Tellerfarbenausreibmaschine | | | | | | | | Verschnittverhältnis für Farbtiefenwert 1/9 |
|---|---|---|---|---|---|---|---|---|---|
| | Purton | | | | Aufhellung | | | | |
| | L* | a* | b* | C* | L* | a* | b* | C* | |
| Beispiel 1 | 62,9 | 10,1 | 50,0 | 51,0 | 82,3 | 4,6 | 37,1 | 37,4 | -5,8 |
| Beispiel 2 | 62,5 | 10,5 | 49,5 | 50,6 | 82,2 | 4,7 | 36,5 | 36,8 | -6,3 |
| Beispiel 3 | 62,3 | 10,4 | 49,4 | 50,5 | 82,2 | 4,7 | 36,1 | 36,4 | -6,5 |
| Vergleichsbeispiel 1 | 59,5 | 11,4 | 47,8 | 49,1 | 82,0 | 5,1 | 32,7 | 33,0 | -9,0 |
| Vergleichsbeispiel 2 | 60,7 | 10,5 | 47,7 | 48,8 | 81,9 | 4,7 | 34,4 | 34,7 | -7,5 |
| Ferrit® Y25LO | 60,7 | 10,7 | 48,6 | 49,8 | 82,1 | 4,8 | 34,6 | 35,0 | -7,5 |
| Bayferrox® 3910LV Standard 1987 | 62,8 | 9,9 | 49,6 | 50,5 | 82,1 | 4,6 | 37,5 | 37,7 | -5,4 |
| Bayferrox® 3910 Standard 1987 | 62,8 | 9,9 | 49,6 | 50,5 | 82,1 | 4,6 | 37,5 | 37,7 | -5,4 |
| Bayferrox® 3920 Standard 2002 | 61,4 | 10,5 | 48,9 | 50,1 | 81,5 | 4,9 | 36,7 | 37,0 | -5,3 |

**Patentansprüche**

1. Eisenoxidgelbpigment

   • mit einer Ölzahl < 25 und entweder
   • einem a*-Wert von > 4,3 gemessen nach CIELAB-Einheiten in Aufhellung in L64 gemäß DIN 6174 und/oder einem b*-Wert von > 34 gemessen nach CIELAB-Einheiten in Aufhellung in L64 gemäß DIN 6174 oder
   • einem a*-Wert von > 10 gemessen nach CIELAB-Einheiten in Purton gemäß DIN 6174 und/oder einem b*-Wert von > 45 gemessen nach CIELAB-Einheiten in Purton gemäß DIN 6174,

   und einen Verschnittverhältnis für den Farbtiefenkennwert B 1/9 nach DIN 53235 Teil 1 und 2 von > - 6.5.

2. Eisenoxidgelbpigment gemäß Anspruch 1, **dadurch gekennzeichnet, dass** das Eisenoxidgelbpigment eine Dispergierbarkeit nach EN 21524 / DIN ISO 1524 (2002) in der erweiterten Form als "3-Kästchen-Methode" von besser als 30-50-70 aufweist.

3. Eisenoxidgelbpigment gemäß einem oder mehreren der Ansprüche 1 bis 2, **dadurch gekennzeichnet, dass** das Eisenoxidgelbpigment eine Wasserzahl < 50 aufweist.

4. Eisenoxidgelbpigment gemäß einem oder mehreren der Ansprüche 1 bis 3, **dadurch gekennzeichnet, dass** das Eisenoxidgelbpigment eine BET > 14 aufweist.

5. Eisenoxidgelbpigment gemäß einem oder mehreren der Ansprüche 1 bis 4, **dadurch gekennzeichnet, dass** das Eisenoxidgelbpigment eine Schüttdichte > 0,4 aufweist.

6. Eisenoxidgelbpigment gemäß einem oder mehreren der Ansprüche 1 bis 5, **dadurch gekennzeichnet, dass** das Eisenoxidgelbpigment eine Stampfdichte > 0,7 aufweist.

7. Eisenoxidgelbpigment gemäß einem oder mehreren der Ansprüche 1 bis 6, **dadurch gekennzeichnet, dass** das Eisenoxidgelbpigment eine Viskosität in MAP < -25 gegen Bayferrox® 3910 aufweist.

8. Verwendung des Eisenoxidgelbpigments nach einem oder mehreren der Ansprüche 1 bis 7 zur Einfärbung von anorganischen oder organischen Dispersionen, von Erzeugnissen der Farben-, Lack-, Beschichtungs-, Baustoff-, Kunststoff- und Papierindustrie, in Lebensmitteln, sowie in Produkten der Pharmaindustrie wie Tabletten.

25/–/–μm

**Fig. 1**

<10/25/35μm

**Fig. 2**

15/–/–μm

**Fig. 3**

10/25/–μm

**Fig. 4**

<10/–/30μm

**Fig. 5**

<10/25/35μm

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1327061 A1
- US 1368748 A1
- DE 3907910 A1
- DE 2455158 A1

**In der Beschreibung aufgeführte Nicht-Patentliteratur**

- Ullmann's Encyclopedia of Industrial Chemistry. vol. A20, 297